Europäisches Patentamt

**European Patent Office**

**Office européen des brevets**

(11) Publication number: **0 039 668**
A1

(12) # EUROPEAN PATENT APPLICATION

(21) Application number: **81850080.3**

(22) Date of filing: **06.05.81**

(51) Int. Cl.³: **G 01 N 1/20**

(30) Priority: **06.05.80 SE 8003387**

(43) Date of publication of application: **11.11.81**
**Bulletin 81/45**

(84) Designated Contracting States: **CH DE FR GB LI NL**

(71) Applicant: **Process-Instrument I Krokom AB, Box 41, S-830 40 Krokom (SE)**

(72) Inventor: **Jonsson, Rolf Ake, Ringvägen 30, S-830 40 Krokom (SE)**

(74) Representative: **FORSHEDEN, Jarl et al, L.A. Groth & Co. AB Västmannagatan 43, S-113 25 Stockholm (SE)**

(54) **Apparatus for leading a partial fluid flow from a conduit.**

(57) An apparatus is provided for deflecting a partial fluid flow from a conduit to an area where measurement, e. g. of turbidity or pH are carried out, and includes a container (2) equipped with measuring means, said container being attached fluid-tight and removably to the conduit and having a through-flow channel (15), the inlet and outlet of which communicate with the conduit via mutually spaced holes (6, 7) made in the longitudinal direction of the conduit. With the holes there are associated tongues (12, 13) adapted for controlling the partial fluid flow to the inlet and from the inlet.

## DESCRIPTION

Apparatus for leading a partial fluid flow from a conduit.

### Technical Field

The present invention relates to an apparatus for deflecting a partial fluid flow from a conduit to an area where measurements are made on the fluid.

### Background Art

When measuring the purity of washing or rinsing water, pumped through piping in dairies for removing milk residue and the like, attempts have been made to use a turbidity meter which has either been inserted in the conduit or in a branch pipe provided with a cooler and leading to the conduit and to waste. Since the rinsing water has high temperature, the direct contact between it and the meter, when the latter is inserted in the conduit, results in that it becomes spoilt or that its function is deteriorated, this solution thus not being utilizable. In the case where a branch pipe with cooler is used, the meter being destroyed is indeed avoided, but material and installation costs will be high, at the same time as the heat content of the water discharged to the waste will be lost.

### Disclosure of the Invention

The object of the present invention is to provide an apparatus by means of which the above-mentioned disadvantages have been circumvented.

This object is attained by the invention having been given the characterizing features disclosed in the claims.

The foremost advantages of the apparatus in accordance with the invention is that it is easy and cheap to manufacture, it is simple to fit to a pipe, and movable from one test point to another, it gives small flow resistance, and does not cause any measurement lag, the turbidity of a liquid can be measured without the measuring apparatus being subjected to the effect of heat, coolers or similar auxiliary equipment do not need to be used, and the liquid on which measurement is carried out is immediately returned to the pipe after measurement.

Brief description of drawings

Figure 1 is a side view of a conduit with the apparatus in accordance with the invention fitted to it,

Figure 2 is a section along the line II-II in Figure 1 and

Figure 3 is a view seen from above of the conduit illustrated in Figures 1 and 2.

Best Mode for Carrying Out the Invention

A part of a conduit, e.g. for conveying milk in a dairy, is denoted on the figures by the numeral 1. In order to carry out measurements such as those for turbidity, redox, pH or conductivity of the milk or of a fluid which is passed through the conduit to clean it, an apparatus in accordance with the invention has been fitted to the conduit. The apparatus has the form of a parallelepipedic box 2 with an upwardly open side, the edges of which engage sealingly against the cylindrical surface of the conduit 1 via rectangular, closed, sealing ring 3. The box 2 is fitted to the underside of the conduit 1, but if so desired it can be fitted to one side thereof instead. However, to prevent air bubbles forming in the box, the greater part of it should be situated under the longitudinal axis of conduit 1. The box 2 is removably attached to the conduit 1 by means of hose clips 4 and 5.

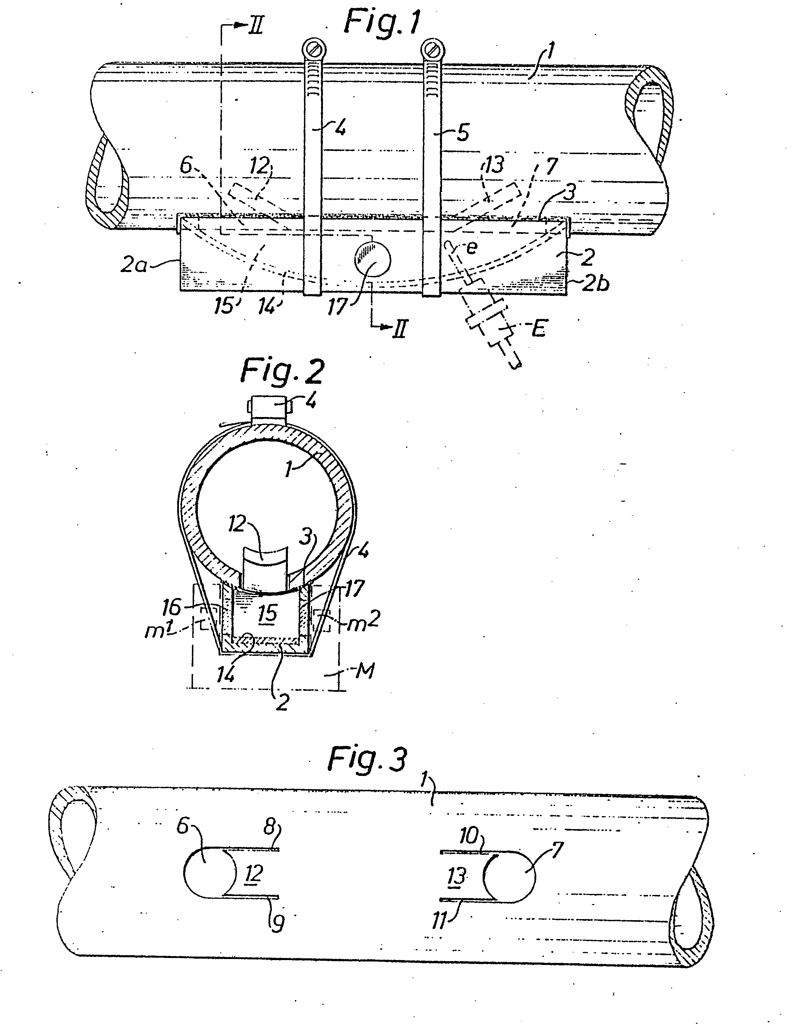

As will be seen from Figures 1 and 3, there are two holes 6, 7 in the conduit at mutual spacing along its longitudinal direction. Parallel to the longitudinal axis of the conduit 1 each hole has been provided with two slits 8, 9 and 10, 11, respectively, each pair of slits defining a tongue 12 and 13, respectively, which is bent in towards the centre of the conduit 1. The box 2 is fitted to the conduit such that the holes 6, 7 and tongues 12, 13 come within the walls of the box in the vicinity of its end walls 2a and 2b, as shown in Figure 1. A continuously curved plate 14 is fixed inside the box 2, to form a wall for a through flow channel 15, the remaining walls of which are formed by the cylindrical surface of the conduit between the tongues 11, 13 and portions of the opposing side walls of the box parallel to the conduit.

By reason of the continuously curved wall 14 and both tongues 12, 13 there is obtained a substantially laminar flow of the fluid led through the channel 15, the tongue 12 leading fluid to the channel inlet, if the fluid is fed from left to right in Figure 1, with the tongue 13 contributing to provide an advantageous flow pattern at the channel outlet. If the fluid is fed from right to left in Figure 1, the tongue 13 leads the fluid into the channel 15, while the tongue 12 advantageously affects the flow pattern at the channel outlet.

Sight glasses 16 and 17 are sealingly inserted in holes opposite each other in the side walls of the box, which are parallel to the conduit. A turbidity meter of known type, e.g. one sold under the name of Turbidimeter, type ATM 20, by Cerlic Electronics AB, Solna, Sweden, can be used for measuring the turbidity of the fluid flowing through the channel 15. Such a meter includes a U-shaped measuring part M, schematically illustrated in Figure 2, which is mounted over the box 2 so that its light-emitting and -receiving means $m^1$ and $m^2$ come in the centre of the sight glasses 16 and 17.

A meter E, e.g. a pH, redox or conductivity meter, with an electrode e, thrusting into the channel 15, is attached to the bottom of the box 2 and is schematically illustrated in Figure 2. If so desired, several meters of the kind mentioned or of some other kind can naturally be removably or permanently mounted on the box 2, for carrying out measurements on the fluid flowing through the channel 15.

Although only one embodiment of the invention has been described above and illustrated on the drawing, it will be understood that modifications of this embodiment as well as other embodiments are possible without departing from the inventive concept. The invention is thus only restricted by what is disclosed in the claims.

CLAIMS

1.      Apparatus for deflecting a partial fluid flow from a conduit (1) to an area where measurements are carried out on the fluid, said apparatus including a container (2) equipped with, or coacting with measuring means (M, E), the container being attached fluid-tight to the conduit and having a through-flow channel (15), the inlet and outlet of which communicate with the conduit via mutually spaced holes (6, 7) made therein, characterized in that two opposing walls of the container (2), which define the through flow channel (15), are provided with directly opposing transparent portions (16, 17) arranged at a distance from each other which is less than the distance between the opposing walls of the conduit.

2.      Apparatus as claimed in claim 1, characterized in that at least a portion of the through-flow channel (15), is continuously curved from inlet to outlet for providing a laminar flow to the fluid flowing through it.

3.      Apparatus as claimed in claim 1 or 2, characterized in that the container (2) is removably attached to the substantially horizontally extending conduit (1) in a position where the major portion of the container is below the longitudinal axis of the conduit.

4.      Apparatus as claimed in any of the preceding claims, characterized in that the container is made as a substantially parallelepipedic box (2) with one open side, the edges of which sealingly engage against the cylindrical surface of the conduit, and that the box on both its opposing covered sides parallel to the conduit is provided with said transparent portions (16, 17).

5.      Apparatus as claimed in any of the preceding claims, characterized by a measuring means (M) mounted in conjunction with the transparent portions (16, 17) for turbidity measurement, and preferably by at least one electrode (e) projecting into the through flow channel (15) for pH, redox or conductivity measurement of the fluid flowing through the channel.

*Fig.1*

*Fig.2*

*Fig.3*

**European Patent Office**

## EUROPEAN SEARCH REPORT

EP 81 85 0080.3

| | DOCUMENTS CONSIDERED TO·BE RELEVANT | | CLASSIFICATION OF THE APPLICATION (Int. Cl.3) |
|---|---|---|---|
| Category | Citation of document with indication, where appropriate, of relevant passages | Relevant to claim | |
| | US – A – 4 018 089 (G. DZULA et al.) <br> * abstract and fig. 4 * <br> –– | 1 | G 01 N 1/20 |
| A | US – A – 4 113 390 (W.E. LEVINE) <br> –– | | |
| A | US – A – 4 167 117 (C. O. STOKLEY et al.) <br> –– | | |
| A | US – A – 3 713 743 (R.J. SIMMS) <br> –– | | **TECHNICAL FIELDS SEARCHED (Int. Cl.3)** |
| A | US – A – 3 665 201 (J.J. SHEA et al.) <br> ––· | | F 16 L 41/00 <br> G 01 N 1/00 <br> G 01 N 21/00 |
| A | US – A – 2 800 869 (A.L. BARRIER) | | |

**CATEGORY OF CITED DOCUMENTS**

X: particularly relevant
A: technological background
O: non-written disclosure .
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> Berlin | Date of completion of the search <br> 10-08-1981 | Examiner <br> SCHWARTZ | |